# EUROPEAN PATENT SPECIFICATION

(11) **EP 4 463 494 B1**
(45) Date of publication and mention of the grant of the patent: **24.12.2025**
(21) Application number: 23703954.0
(22) Date of filing: 06.01.2023
(51) Int. Cl.: C08G 18/10, C08G 18/12, C08G 18/24, C08G 18/28, C08G 18/48, C08G 18/50, C08G 18/71, C08G 18/72, C08G 18/76, C08G 18/79, C09J 175/08

(54) **TWO-COMPONENT POLYURETHANE ADHESIVE COMPOSITION**
ZWEIKOMPONENTEN-POLYURETHANKLEBSTOFFZUSAMMENSETZUNG
COMPOSITION ADHÉSIVE DE POLYURÉTHANE À DEUX COMPOSANTS

(30) Priority: 12.01.2022 US 202263266693 P
(43) Date of publication of application: 20.11.2024
(73) Proprietor: DDP Specialty Electronic Materials US, LLC, Wilmington, DE 19805 (US)
(72) Inventor: ZHU, Huide, AUBURN HILLS, Michigan 48326 (US); AUVIL, Tyler, AUBURN HILLS, Michigan 48326 (US); FELDPAUSCH, Matthew, AUBURN HILLS, Michigan 48326 (US); VOGEL, Gavin, AUBURN HILLS, Michigan 48326 (US); CLARK, Thomas, AUBURN HILLS, Michigan 48326 (US); MIRDAMADI, Mansour, AUBURN HILLS, Michigan 48326 (US); LUTZ, Andreas, 8807 Freienbach (CH)
(74) Representative: Abitz & Partner
(86) International application number: PCT/US2023/010282
(87) International publication number: WO 2023/136989

(56) References cited:
- WO-A1-2016/204978
- WO-A1-2021/115810
- WO-A1-2021/124075

## Description

### Field of Invention

The present invention relates to the field of two-component polyurethane adhesive compositions.

### Background of the Invention

Two-component polyurethane adhesives are commonly used in bonding various substrates together such as glass, metal or coated metal and plastics.

For applications such as bonding components of an electric vehicle battery pack, thermally-conductive two-component polyurethane adhesives are increasingly used. Typically, two component polyurethane adhesives have good bonding strength but do not have adequate elongation and toughness.

Two-component thermally conductive polyurethane adhesives are commonly prepared by combining an isocyanate component with a polyol component. The polyol component has polyether polyol, such as polypropyleneoxide polyol or a blend of polyetherpolyols, such as polypropyleneoxide polyols having different molecular weights. Both isocyanate and polyol component comprise high levels of thermally conductive fillers, impacting the physical properties, in particular elongation. Typical two-component thermally conductive polyurethane adhesives do not offer high bonding strength and good elongation at the same time. WO2016/204978A1 discloses two-part polyurethane adhesives. WO2021/115810A1 discloses thermally conductive polyurethane adhesive composition. WO2021/124075A1 discloses two-part compositions.

A need remains for thermally conductive, two-component polyurethane adhesives having good thermal conductivity, high bonding strength and good elongation.

### Summary of the Invention

In a first aspect, the invention provides a thermally conductive, two-component polyurethane adhesive composition comprising:
(A) a polyisocyanate component, Component A, comprising:
   (a1) at least one polyisocyanate;
   (a2) 40 to 85 wt% thermally conductive filler, based on the total weight of Component A;
   (a3) optionally a polyether polyol;
   (a4) optionally a silane adhesion promoter;
(B) a polyol component, Component B, comprising:
   (b1) at least one polyether polyol;
   (b2) 40 to 85 wt% thermally conductive filler, based on the total weight of Component B;
   (b3) a catalyst capable of catalyzing the reaction of an isocyanate and a polyol;
   (b4) optionally a silane adhesion promoter;
      wherein at least one of the polyether polyols in Component A and Component B is a poly(tetramethylene oxide) glycol, and wherein the equivalent ratio of the isocyanate from Component A over the hydroxyl from Component B is from 0.8 to 2.0.

In a second aspect, the invention provides a method for adhering two or more substrates, comprising the steps of:
(1) providing a thermally conductive, two-component polyurethane adhesive composition comprising:
   (A) a polyisocyanate component, Component A, comprising:
      (a1) at least one polyisocyanate;
      (a2) 40 to 85 wt% thermally conductive filler, based on the total weight of Component A;
      (a3) optionally a polyether polyol;
      (a4) optionally a silane adhesion promoter;
   (B) a polyol component, Component B, comprising:
      (b1) at least one polyether polyol;
      (b2) 40 to 85 wt% thermally conductive filler, based on the total weight of Component B;
      (b3) a catalyst capable of catalyzing the reaction of an isocyanate and a polyol;
      (b4) optionally a silane adhesion promoter;
   wherein at least one of the polyether polyols in Component A and Component B is a poly(tetramethylene oxide) glycol, and wherein the equivalent ratio of the isocyanate from Component A over the hydroxyl from Component B is from 0.8 to 2.0;
(2) mixing Component A and Component B in a desired ratio to produce the adhesive;
(3) applying the adhesive to at least one substrate;
(4) bringing a second substrate into contact with the adhesive; and
(5) allowing the adhesive to cure.

### Detailed Description of the Invention

The inventors have found that it is possible to achieve good thermal conductivity, high bond strength and good elongation using the two-component polyurethane adhesive of the invention.

### Definitions and abbreviations

- MDI: 4,4'-Methylenebis(phenyl isocyanate)
- HDI: Hexamethylene diisocyanate
- IPDI: isophorone diisocyanate
- PU: polyurethane
- SEC: size exclusion chromatography
- RH: relative humidity
- CF: cohesive failure
- AF: adhesive failure

Equivalent and molecular weights are measured by gel permeation chromatography (GPC) with a Malvern Viscothek GPC max equipment. Tetrahydrofuran (THF) was used as an eluent, PL GEL MIXED D (Agilent, 300*7.5 mm, 5 µm) was used as a column, and MALVERN Viscotek TDA (integrated refractive index viscometer and light scattering) was used as a detector.

### Component A

Component A comprises:
(a1) at least one polyisocyanate;
(a2) 40 to 85 wt% thermally conductive filler, based on the total weight of Component A;
(a3) optionally a polyether polyol;
(a4) optionally a silane adhesion promoter;

### At least one polyisocyanate (a1)

The polyisocyanate is not particularly limited. Preferred are polyisocyanates with isocyanate functionality of 2 or more and 4 or less.

Aliphatic and aromatic diisocyanates may be used, with aromatic being preferred. Examples of suitable diisocyanates include toluene diisocyanate (TDI), hexamethylene diisocyanate (HDI), naphthalene diisocyanate (NDI), methylene *bis-*cyclohexylisocyanate (HMDI) (hydrogenated MDI), MDI (in particular 4,4'- and 4,2-MDI) and isophorone diisocyanate (IPDI), polycarbodiimide-modified MDI, with polycarbodiimide-modified MDI being particularly preferred.

In a preferred embodiment, the polyisocyanate is selected from polymeric MDI, polycarbodiimide-modified MDI, and mixtures of these.

In a preferred embodiment, the polyisocyanate is polycarbodiimide-modified 4,4'-methylenediphenyl diisocyanate. Particularly preferably, Component A comprises 15 to 25 wt% polycarbodiimide-modified 4,4'-methylenediphenyl diisocyanate, based on the total weight of Component A.

The at least one polyisocyanate is preferably present in Component A at 18-24 wt%, more preferably 19-22 wt%, particularly preferably 20 wt%, based on the total weight of Component A.

The total polyisocyanate concentration in Component A is preferably 18-24 wt%, more preferably 19-22 wt%, particularly preferably 20 wt%, based on the total weight of Component A.

### Thermally conductive filler (a2), (b2)

Component A and Component B comprise 40 to 85 wt% thermally conductive filler, based on the total weight of Component A or Component B.

The thermally conductive filler used as a2 and b2 is not particularly limited. Suitable thermally conductive fillers are those that have a coefficient of thermal conductivity that is greater than 5 W/m°K, greater than 10 W/m°K, or greater than 15 W / m°K. Examples of thermally conductive fillers include alumina, alumina trihydrate or aluminum trihydroxide, silicon carbide, boron nitride, diamond, and graphite, or mixtures thereof. Particularly preferred are aluminium trihydroxide (ATH), and aluminium oxide, with ATH being the most preferred. Thermally-conductive fillers may be surface treated or non-treated.

In a preferred embodiment, the thermally conductive filler has a broad particle size distribution characterized by a ratio of D₉₀ / D₅₀ of at or about 3 or more. Particularly preferably the thermally conductive filler is ATH or aluminium oxide having a broad particle size distribution characterized by a ratio of D₉₀ / D₅₀ of at or about 3 or more, most preferably ATH.

Also preferred are thermally conductive fillers having a bimodal particle size distribution. A bimodal distribution is when, for example, the ratio D₉₀ / D₅₀ is at or about 3 or more, more preferably at or about 5 or more, more particularly preferably at or about 9 or more. For example, particles having a D₅₀ of 5 to 20 microns and a D₉₀ of 70 to 90 microns, particularly a D₅₀ of 7-9 microns and a D₉₀ of 78-82 microns. Particle size can be determined using laser diffraction. For ATH a suitable solvent is deionized water containing a dispersion aid, such as Na₄P₂O₇ x 10 H₂O, preferably at 1 g/l. Preferred are aluminium oxide and ATH having a bimodal distribution, particularly ATH. In a preferred embodiment, the thermally conductive filler is ATH having D₉₀ / D₅₀ at or about 3 or more, more preferably at or about 5 or more, particularly preferably at or about 9 or more.

In a preferred embodiment, the thermally conductive filler is bimodally distributed aluminium trihydroxide (ATH), having the following particle size distribution (by laser diffraction in deionized water containing a dispersion aid, such as Na₄P₂O₇ x 10 H₂O, preferably at 1 g/l):
D₁₀ (micron) 0.5
D₅₀ (micron) 8
D₉₀ (micron) 80

The thermally conductive filler is present in the final adhesive at a concentration of 65-85 wt%, based on the total weight of the adhesive. It is preferably present in the final adhesive at a concentration that gives a thermal conductivity of at or about 1.1 W/mK or more, after curing for 7 days at 23°C.

If Component A and Component B are mixed in a volumetric ratio of 1:1, the preferred concentration of the thermally conductive filler in Component A is from 60 to 85 wt%, more preferably 62 to 70 wt%, based on the total weight of Component A.

If Component A and Component B are mixed in a volumetric ratio of 1:1, the preferred concentration of the thermally conductive filler in Component B is from 60 to 85 wt%, more preferably 63 to 72 wt%, based on the total weight of Component B.

In a preferred embodiment, Component A comprises 60 to 85 wt%, more preferably 62 to 70 wt%, based on the total weight of Component A, of ATH having D₉₀ / D₅₀ at or about 3 or more, more preferably at or about 5 or more, particularly preferably at or about 9 or more.

In a preferred embodiment, Component B comprises 60 to 85 wt%, more preferably 62 to 70 wt%, based on the total weight of Component B, of ATH having D₉₀ / D₅₀ at or about 3 or more, more preferably at or about 5 or more, particularly preferably at or about 9 or more.

### Polyether polyol (a3, b1)

The at least one polyetherpolyol is preferably a diol, triol or tetra-ol. Preferably it is a diol, triol or a mixture of a diol and a triol, with mixtures of diols and triols being particularly preferred.

Polyether polyols are well-known in the art and include, for example, polyoxyethylene, polyoxypropylene, polyoxybutylene, and polytetramethylene ether diols and triols which may be prepared, for example, by reacting an unsubstituted or halogen- or aromatic-substituted ethylene oxide or propylene oxide with an initiator compound containing two or more active hydrogen groups such as water, ammonia, a polyalcohol, or an amine. In general, polyether polyols may be prepared by polymerizing alkylene oxides in the presence of an active hydrogen-containing initiator compound. Preferred polyether polyols contain one or more alkylene oxide units in the backbone of the polyol. Preferred alkylene oxide units are ethylene oxide, propylene oxide, butylene oxide and mixtures thereof. Preferably, the polyol contains propylene oxide units, ethylene oxide units or a mixture thereof. In the embodiment where a mixture of alkylene oxide units is contained in a polyol, the different units can be randomly arranged or can be arranged in blocks of each alkylene oxides. In one preferred embodiment, the polyol comprises propylene oxide chains. In a preferred embodiment, the polyether polyols are a mixture of polyether diols and polyether triols. Preferably, the polyether polyol or mixture has a functionality of at least about 2.0; and is preferably about 2.0 to 3.0 or greater, for example, 3.5, 4.0 or greater. Preferably, the equivalent weight of the polyether polyol mixture is from 45 to 1,200 g/eq.

More specific examples of polyether polyols include:
1. Difunctional polyols (diols), such as poly(alkylene oxide)diols, where the alkylene group is C₂ to C₄, particularly poly(ethylene oxide)diol, poly(propylene oxide)diol, poly(butylene oxide) diol and poly(tetramethylene oxide)diol, with poly(propylene oxide)diol being particularly preferred. In a particularly preferred embodiment the polyether polyol comprises a nominally difunctional, poly(propylene oxide) having an equivalent weight of from 80 to 2,500 g/eq, more preferably 200 to 1500 g/eq;
2. Trifunctional polyols (triols), such as those based on the akylene oxides initiated with a trifunctional polyol, such as trimethylolpropane, where the alkylene group is C₂ to C₄, particularly ethylene oxide, propylene oxide, butylene oxide, tetramethylene oxide and butylene oxide, with propylene oxide being particularly preferred. In a particularly preferred embodiment, the polyether polyol comprises a nominally trifunctional poly(propylene oxide) having an equivalent weight of from 80 to 2,500 g/eq, more preferably 80 to 90 g/eq; the polymer may or may not be capped with ethylene oxide to modify reactivity.
3. A mixture of 1 and 2. Particularly preferred is a mixture of 1 and 2, more particularly preferred is a mixture of a) a nominally difunctional, poly(propylene oxide) having an equivalent weight of from 100 to 2,500, more preferably 200 to 1,500, particularly preferably 200 to 1,100 and b) a nominally trifunctional poly(propylene oxide)and equivalent weight of 80 to 90.

In a particularly preferred embodiment, the at least one polyol comprises a mixture of propylene oxide-based diols and triols.

In a preferred embodiment, the at least one polyol comprises a mixture of two or more diols with one or more triols. Particularly preferred is a mixture of two or more poly(propylene oxide)-based diols with a poly(propylene oxide)-based triol.

In a preferred embodiment, the at least one polyol in Component B comprises:
- a poly(propylene oxide) diol having an equivalent weight of 1,000 g/eq;
- a poly(propylene oxide) diol having an equivalent weight of 200-220 g/eq;
- a poly(propylene oxide) triol having an equivalent weight of 80-90 g/eq.

In another preferred embodiment, the at least one polyol in Component B comprises:
- a poly(propylene oxide) diol having an equivalent weight of 1,000 g/eq at about 1 to 3 wt%, based on the total weight of Component B;
- a poly(propylene oxide) diol having an equivalent weight of 200-220 g/eq at 8 to 10 wt%, based on the total weight of Component B;
- a poly(propylene oxide) triol having an equivalent weight of 80-90 g/eq at 1.5 to 4 wt%, based on the total weight of Component B.

Component A and/or Component B comprise poly(tetramethylene oxide)diol (PTMEG) as polyol. The PTMEG preferably has a molecular weight of 200 to 2,000 Da, preferably 500 to 1500 Da, more preferably 1,000 Da.

In a preferred embodiment, the PTMEG is present in Component B. In a particularly preferred embodiment, the PTMEG is present in Component B at 1 to 20 wt%, preferably 5 to 20 wt%, more preferably 10 to 15 wt%, based on the total weight of Component B.

In a preferred embodiment, the PTMEG is present only in Component B. In a particularly preferred embodiment, the PTMEG is present only in Component B at 1 to 20 wt%, preferably 5 to 20 wt%, more preferably 10 to 15 wt%, based on the total weight of Component B.

In a preferred embodiment, the PTMEG has a molecular weight of 1,000 Da, and is present in Component B at 10 to 15 wt%, more preferably 11 to 12 wt%, based on the total weight of Component B.

In a preferred embodiment, the PTMEG has a molecular weight of 1,000 Da, and is present only in Component B at 10 to 15 wt%, more preferably 11 to 12 wt%, based on the total weight of Component B.

In a preferred embodiment, the PTMEG is present in the final adhesive (mixture of Components A and B) at 5 to 7.5 wt%, more preferably 5 to 6 wt%, based on the total weight of the adhesive.

In a preferred embodiment, Component B comprises:
- a poly(propylene oxide) diol having an equivalent weight of 1,000 g/eq;
- a poly(propylene oxide) diol having an equivalent weight of 200-220 g/eq;
- a poly(propylene oxide) triol having an equivalent weight of 80-90 g/eq; and
- PTMEG diol having an equivalent weight of 250 -1,000 g/eq, more preferably 500 g/eq.

In another preferred embodiment, Component B comprises:
- a poly(propylene oxide) diol having an equivalent weight of 1,000 g/eq at about 1 to 3 wt%, based on the total weight of Component B;
- a poly(propylene oxide) diol having an equivalent weight of 200-220 g/eq at 8 to 10 wt%, based on the total weight of Component B;
- a poly(propylene oxide) triol having an equivalent weight of 80-90 g/eq at 1.5 to 4 wt%, based on the total weight of Component B; and
- PTMEG diol having an equivalent weight of 250 -1,000 g/eq, more preferably 500 g/eq, at 5 to 15 wt%, more preferably 10 to 12 wt%, based on the total weight of Component B.

In another preferred embodiment, Component B comprises:
- a poly(propylene oxide) diol having an equivalent weight of 1,000 g/eq at about 1 to 3 wt%, based on the total weight of Component B;
- a poly(propylene oxide) diol having an equivalent weight of 200-220 g/eq at 8 to 10 wt%, based on the total weight of Component B;
- a poly(propylene oxide) triol having an equivalent weight of 80-90 g/eq at 1.5 to 4 wt%, based on the total weight of Component B; and
- PTMEG diol having an equivalent weight of 500 g/eq, at 10 to 12 wt%, based on the total weight of Component B.

### Silane adhesion promoter (a4, b4)

The silane adhesion promoter is any molecule bearing a hydrolysable silane moiety attached to a functional group selected from an amino group, a mercapto group and an epoxy group. The hydrolysable silane moiety can come from an alkoxysilane moiety.

The alkoxy groups in the alkoxy silane moiety are preferably selected from C₁ to C₄ alkoxy, that is, methoxy, ethoxy, propoxy and butoxy. In a preferred embodiment, the alkoxy groups are methoxy or ethoxy, in particular methoxy.

In a preferred embodiment, the functional group is amino and the trialkoxy silane moiety is trimethoxy silane.

In a preferred embodiment, the functional group is mercapto and the trialkoxy silane moiety is trimethoxy silane.

In a preferred embodiment, the functional group is epoxy and the trialkoxy silane moiety is trimethoxy silane.

Examples of silane adhesion promoters include:

### Amino silanes

Diethylaminomethyltrimethoxy silane, diethylaminomethylmethyldiethoxy silane, diethylaminomethyltriethoxy silane, piperazinylpropylmethyldimethoxy silane, diethylenetriaminopropylmethyldimethoxy silane, aminoethylaminopropyltriethoxy silane, bis-[(3-triethoxysilyl)propyl]amine, diethylaminomethyltriethoxysilane, N-(2-aminoethyl)-3-aminopropyltrimethoxysilane, N-(2-aminoethyl)-3-aminopropylmethyldimethoxysilane, aminopropylmethyldimethoxysilane, bis-(trimethoxysilylpropyl)amine, gamma-aminopropyltrimethoxysilane, 3-trimethoxysilyl-N-(3-trimethoxysilylpropyl)propan-1-amine, N-beta-(aminoethyl)-gamma-aminopropyltrimethoxysilane, gamma-aminopropyltriethoxysilane, phenylaminopropyltrimethoxysilane, N-ethyl-3-trimethoxysilyl-2-methylpropanamine, aminoethylaminopropylmethyldimethoxysilane, N-2-aminoethyl-3-aminopropyltrimethoxysilane, 3-aminopropyltrimethoxysilane, 3-aminopropyltriethoxysilane, 3-aminopropylmethyldiethoxysilane, N-(2-aminoethyl)-3-aminopropylmethyldimethoxysilane, 1-propanamine, 3-(triethoxysilyl), N-(n-butyl)-3-aminopropyltrimethoxysilane, bis-(trimethoxysilylpropyl)amine, with 3-trimethoxysilyl-N-(3-trimethoxysilylpropyl)propan-1-amine being particularly preferred.

### Epoxy silanes

2-(3,4-epoxycyclohexyl)-ethyltriethoxy silane, 3-glycidoxypropylmethyldimethoxysilane, (epoxypropoxypropyl)methyldiethoxysilane, 3-glycidoxypropylmethyldiethoxysilane, gamma-glycidoxypropyltrimethoxysilane, beta-(3,4-epoxycyclohexyl)ethyltrimethoxysilane, 3-glycidyloxypropyltrimethoxysilane, gamma-glycidoxypropyltriethoxysilane, 3-glycidyloxypropyltriethoxysilane, 9-[2-(2-methoxyethoxy)ethoxy]-9-[3-(oxiranylmethoxy)propyl]-2,5,8,10,13,16-hexaoxa-9-silaheptadecane.

### Mercapto silanes

Mercaptomethyltriethoxysilane, mercaptomethyltrimethoxysilane, 3-mercaptopropylmethyldiethoxysilane, mercaptopropylmethyldimethoxysilane, gamma-mercaptopropyltrimethoxysilane, 3-(triethoxysilyl)propanethiol, gamma-mercaptopropyltrimethoxysilane, 3-mercaptopropyltrimethoxysilane.

In a preferred embodiment, the silane adhesion promoter is an amino silane.

In another preferred embodiment, the silane adhesion promoter is 3-trimethoxysilyl-N-(3-trimethoxysilylpropyl)propan-1-amine.

In a preferred embodiment, the silane adhesion promoter is present in Component A.

In another preferred embodiment, the silane adhesion promoter is present in Component B.

In another preferred embodiment, the silane adhesion promoter is present only in Component A.

In a particularly preferred embodiment, the silane adhesion promoter is 3-trimethoxysilyl-N-(3-trimethoxysilylpropyl)propan-1-amine and is present only in Component A.

The silane adhesion promoter, if used, is preferably present in Component A and/or Component B at 0.1 to 4 wt%, preferably 0.5 to 3%, more preferably at 1.5 to 3 wt%, based on the total weight of the respective Component.

In a preferred embodiment, the silane adhesion promoter is present in Component A at 0.1 to 4 wt%, preferably 0.5 to 3%, more preferably at 1.5 to 3 wt%, based on the total weight of Component A.

In a particularly preferred embodiment, the silane adhesion promoter is 3-trimethoxysilyl-N-(3-trimethoxysilylpropyl)propan-1-amine, and is present in component A at 0.1 to 4 wt%, preferably 0.5 to 3%, more preferably at 1.5 to 3 wt%, based on the total weight of Component A.

### Optional ingredients of Component A

Component A may additionally comprise fillers in addition to the thermally conductive fillers, such as talc, fumed silica, carbon black, and mixtures of these. In a preferred embodiment, Component A comprises fumed silica. In another preferred embodiment, Component A comprises carbon black. In a particularly preferred embodiment, Component A comprises fumed silica and carbon black.

Component A may comprise a polyol, including any of the polyols described above. In a particularly preferred embodiment, Component A comprises a diol of molecular weight 1,000 to 2,500 Da, more preferably 2,000 Da.

If present, the polyol in Component A is preferably present at 5 to 15 wt%, more preferably 9 to 12 wt%, based on the total weight of Component A.

In a particularly preferred embodiment, Component A comprises 9 to 12 wt%, based on the total weight of Component A, of a propylene glycol initiated, 2000 molecular weight homopolymer diol, having an average equivalent weight of 1,000 g/eq, average OH number 56 mg KOH/g.

### Component B

Component B comprises:
(b1) at least one polyether polyol;
(b2) 40 to 85 wt% thermally conductive filler, based on the total weight of Component B;
(b3) a catalyst capable of catalyzing the reaction of an isocyanate and a polyol;
(b4) optionally a silane adhesion promoter.

### Polyether polyol

The polyetherpolyol used in Component B may be selected from any of those listed above.

In a preferred embodiment, the polyether polyol (b1) is selected from poly(propylene oxide)-based diols and triols.

In another preferred embodiment, the polyetherpolyol (b1) comprises polyols selected from:
Poly(propylene oxide) diol;
Poly(propylene oxide) triol;
poly(tetramethylene oxide) diol; and
mixtures of these.

In another preferred embodiment, the polyether polyol (b1) comprises polyols selected from:
a poly(propyleneoxide) polyol diol having an average molecular weight 425 g/mol;
a poly(propyleneoxide) polyol triol having an average molecular weight 250 g/mol; poly(tetramethylene oxide) diol; and
mixtures of these.

In another preferred embodiment, the polyether polyol (b1) comprises polyols selected from:
a poly(propyleneoxide) polyol diol having an average molecular weight 425 g/mol,
average equivalent weight 215.7 g/eq, average OH number 259 mg KOH/g;
a poly(propyleneoxide) polyol triol having an average molecular weight 250, average equivalent weight 84.9 g/eq, average OH number 660 mg KOH/g;
poly(tetramethylene oxide) diol; and
mixtures of these.

In a preferred embodiment, Component B comprises a poly(tetramethylene oxide)diol having a molecular weight of from 200 to 2,000 Da, more preferably 1,000 Da.

In another preferred embodiment, the polyether polyol comprises 1,4-butane diol.

In a particularly preferred embodiment, the polyether polyol comprises polyols selected from:
Poly(propylene oxide) diol;
Poly(propylene oxide) triol;
poly(tetramethylene oxide) diol;
1,4-butane diol; and
mixtures of these.

The total polyether polyol content of Component B is preferably from 20 to 30 wt%, more preferably 24 to 28 wt%, particularly preferably 25 to 27 wt%, based on the total weight of Component B.

The poly(tetramethylene oxide)diol preferably represents from 3 to 55%, preferably 20 to 55 %, more preferably 30 to 50 %, particularly preferably 40 to 48 % of the total polyol content of Component B, based on weight percentages.

The poly(tetramethylene oxide)diol is preferable present in Component B at 1 to 20 wt%, preferably 5 to 20 wt%, more preferably 7 to 15 wt%, particularly preferably 8 to 12 wt%, based on the total weight of Component B.

In a preferred embodiment, Component B comprises:
Poly(propylene oxide) diol;
Poly(propylene oxide) triol;
poly(tetramethylene oxide) diol having a molecular weight of 1,000 Da; and mixtures of these.

In another preferred embodiment, the polyether polyol (b1) comprises polyols selected from:
a poly(propyleneoxide) polyol diol having an average molecular weight 425 g/mol;
a poly(propyleneoxide) polyol triol having an average molecular weight 250 g/mol;
poly(tetramethylene oxide) diol having a molecular weight of 1,000 Da; and
mixtures of these.

In another preferred embodiment, the polyether polyol (b1) comprises polyols selected from:
a poly(propyleneoxide) polyol diol having an average molecular weight 425 g/mol,
average equivalent weight 215.7 g/eq, average OH number 259 mg KOH/g;
a poly(propyleneoxide) polyol triol having an average molecular weight 250, average equivalent weight 84.9 g/eq, average OH number 660 mg KOH/g;
poly(tetramethylene oxide) diol having a molecular weight of 1,000 Da; and
mixtures of these.

In a preferred embodiment, Component B comprises:
Poly(propylene oxide) diol;
Poly(propylene oxide) triol;
1,4-butane diol;
poly(tetramethylene oxide) diol having a molecular weight of 1,000 Da; and mixtures of these.

In another preferred embodiment, the polyether polyol (b1) comprises polyols selected from:
a poly(propyleneoxide) polyol diol having an average molecular weight 425 g/mol;
a poly(propyleneoxide) polyol triol having an average molecular weight 250 g/mol;
1,4-butane diol;
poly(tetramethylene oxide) diol having a molecular weight of 1,000 Da; and
mixtures of these.

In another preferred embodiment, the polyether polyol (b1) comprises polyols selected from:
a poly(propyleneoxide) polyol diol having an average molecular weight 425 g/mol,
average equivalent weight 215.7 g/eq, average OH number 259 mg KOH/g;
a poly(propyleneoxide) polyol triol having an average molecular weight 250, average equivalent weight 84.9 g/eq, average OH number 660 mg KOH/g;
1,4-butane diol;
poly(tetramethylene oxide) diol having a molecular weight of 1,000 Da; and mixtures of these.

### Catalyst (b3)

Component B comprises a catalyst capable of catalysing the reaction of an NCO functionality with an OH functionality.

Examples of such catalysts include tertiary amine catalysts, organometallic catalysts, such as bismuth catalysts, alkyl tin carboxylates, oxides and tin mercaptides.

Specific examples of tertiary amine catalysts include N-methyl morpholine, N-methyl imidazole, triethylenediamine, bis-(2-dimethylaminoethyl)-ether, 1,4-diazabicyclo[2.2.2]octane (DABCO), dimethylcyclohexylamine, dimethylethanolamine, 2,2-dimorpholinyl-diethylether (DMDEE), N,N,N-dimethylaminopropyl hexahydrotriazine, dimethyltetrahydropyrimidine, tetramethylethylenediamine, dimethylcyclohexylamine, 2,2-N,N benzyldimethylamine, dimethylethanol amine, dimethylaminopropyl amine, Penta-dimethyl diethylene triamine, N,N,N',N'-tetramethyl-1,6-hexanediamine, N,N',N'-trimethylaminoethylpiperazine, 1,1'-[[3-(dimethylamino)propyl]imino]bispropan-2-ol, 1,3,5-tris[3-(dimethylamino)propyl]hexahydro-1,3,5-triazine, N-N-dimethyldipropylene triamine, N,N,N'-trimethylaminoethylethanolamine, with DMDEE being particularly preferred.

If an organometallic catalyst is used, it is any organometallic catalyst capable of catalyzing the reaction of isocyanate with a functional group having at least one reactive hydrogen. Examples include bismuth catalysts, metal carboxylates such as tin carboxylate and zinc carboxylate. Metal alkanoates include stannous octoate, bismuth octoate or bismuth neodecanoate. Preferably the at least one organometallic catalyst is a bismuth catalyst or an organotin catalyst. Examples include dibutyltin dilaurate, dimethyl tin dineodecanoate, dimethyltin mercaptide, dimethyltin carboxylate, dimethyltin dioleate, dimethyltin dithioglycolate, dibutyltin mercaptide, dibutyltin bis(2-ethylhexyl thioglycolate), dibutyltin sulfide, dioctyltin dithioglycolate, dioctyltin mercaptide, dioctyltin dioctoate, dioctyltin dineodecanoate, dioctyltin dilaurate. In a particularly preferred embodiment, it is a tin catalyst, particularly preferably dioctyltin mercaptide.

The catalyst is preferably used at 0.001 to 0.12 wt%, more preferably 0.01 to 0.1 wt%, based on the total weight of Component B.

In a preferred embodiment, the catalyst is dioctyl tin mercaptide, used at 0.03 to 0.07 wt% based on the total weight of Component B.

### Optional ingredients of Component B

Component B may additionally comprise fillers in addition to the thermally conductive fillers, such as talc, fumed silica, carbon black, zeolites, and mixtures of these.

In a preferred embodiment, Component B comprises fumed silica.

In another preferred embodiment, Component B comprises carbon black.

In another preferred embodiment, Component B comprises a zeolite.

In a particularly preferred embodiment, Component B comprises fumed silica and carbon black, more preferably Component B comprises fumed silica, carbon black and a zeolite.

Component B may optionally comprise a polyisocyanate, in an amount that when reacted with the polyol part of Component B results in an excess of remaining OH groups.

In a preferred embodiment, Component B comprises MDI, polycarbodiimide-modified MDI.

If Component B comprises a polyisocyanate, it is preferably present at 0.4 to 2 wt%, more preferably 1 to 1.5 wt%, based on the total weight of Component B.

In a preferred embodiment, Component B comprises 0.4 to 2 wt%, more preferably 1 to 1.5 wt%, based on the total weight of Component B, of polycarbodiimide-modified MDI.

### Ratio of NCO groups to OH groups

The equivalent ratio of the isocyanate from Component A over the hydroxyl from Component B is from 0.8 to 2.0, preferably from 0.9 to 1.5, and more preferably from 1.0 to 1.3.

### Method of manufacture

The adhesive compositions of the invention are made by mixing the ingredients of each Component separately, preferably under inert and dry conditions and/or under vacuum, until a homogenous mixture is obtained. Once Component A and B are each prepared, they are stored in separate containers until use.

### Method of use

In one aspect, the invention provides a method for adhering two or more substrates, comprising the steps of:
(1) providing a thermally conductive, two-component polyurethane adhesive composition comprising:
   (A) a polyisocyanate component, Component A, comprising:
      (a1) at least one polyisocyanate;
      (a2) 40 to 85 wt% thermally conductive filler, based on the total weight of Component A;
      (a3) optionally a polyether polyol;
      (a4) optionally a silane adhesion promoter;
   (B) a polyol component, Component B, comprising:
      (b1) at least one polyetherpolyol;
      (b2) 40 to 85 wt% thermally conductive filler, based on the total weight of Component B;
      (b3) a catalyst capable of catalyzing the reaction of an isocyanate and a polyol;
      (b4) optionally a silane adhesion promoter;
   wherein at least one of the polyether polyols in Component A and Component B is a poly(tetramethylene oxide) glycol;
(2) mixing Component A and Component B in a desired ratio to produce the adhesive;
(3) applying the adhesive to at least one substrate;
(4) bringing a second substrate into contact with the adhesive; and
(5) allowing the adhesive to cure.

As mentioned above, a preferred way of providing Components of the adhesive of the invention is in airtight containers, such as airtight sealed tubes. The containers are opened immediately prior to use.

The adhesive composition of the invention may be applied by any application method, manually or with robotic equipment, including, for example, by spreading, application through a nozzle.

In a preferred embodiment one or both of the first and second substrates are selected from metal, coated metal, glass, glass with primer, glass with enamel coating, plastic (e.g. polypropylene, for example with talc or glass fiber), polycarbonate, sheet molded compounds, composites (e.g. carbon fiber reinforced epoxy, glass fibre reinforced polyamide). In a preferred embodiment, at least one of the first and second substrates is metal, in particular steel or aluminium, particularly preferably e-coated steel, e-coated aluminium. In a particularly preferred embodiment, both substrates are e-coated steel.

Curing begins as soon as Components A and B are mixed. Typical curing conditions are 3 to 7 days at 23°C.

### Effect of the invention

The adhesives of the invention show a thermal conductivity, after curing for 7 days at 23°C, of at least 1 W/mK, more preferably at least 1.12 W/mK, more particularly preferably at least 1.16 W/mK, when measured in accordance with ASTM D5470.

The adhesives of the invention preferably show a lap shear elongation at maximum stress, after curing for 7 days at 23°C, of 50% or greater, more preferably 60% or greater, more particularly preferably 64% or greater, when measured according to SAE J1529 method.

For tensile strength, the two-component adhesive sample was dispensed through the spiral static mixer between two releasing papers and then pressed to form a round plaque with 3 mm thickness. The round plaque was cured for 7 days at conditions of 23°C and 50% relative humidity (RH). Three test specimens were cut from the cured sample plaque with the Die C of ASTM D412 and tested at a pulling speed of 50 mm per minute with an Instron Tester Model 5969. Tensile strength (MPa) was calculated by the force at peak (Newton) divided by the specimen cross-section area (mm²) and elongation was determined at the break point of the specimen, all in accordance with ASTM D412. Results for tensile strength and elongation of an adhesive sample were reported from the average of three specimens.

Tensile strength is preferably more than 4 MPa, more preferably more than 5 MPa and more particularly preferably more than 6 MPa. Elongation is preferably more than 15% at break, more preferably more than 25% at break, and more particularly preferably more than 30% at break.

For impact peel measurements, specimens were prepared using E-coated (ED6100C) steel coupons of 25.4 mm in width, 101.6 mm in length and 0.8 mm in thickness. The 2K adhesive sample was dispensed through a spiral static mixer onto one end of the e-coated steel coupon which was then mated with another same e-coated steel coupon forming a 30 mm adhesive overlap and 1.2 mm bondline thickness at the end of the specimen. The impact peel specimen was cured under 23 °C and 50% relative humidity for 7 days or specified conditions. the cured impact specimen was pre-bent into a V shape at the other non-bonded end and then tested with a vertical impacting mass of 23.7 kg at a rate of 2.4 m/s. The reported impact peel strength (Newton/mm) is of the average for the region between 45% and 90% of the displacement to failure, all in accordance with ISO 11343 [2003 04 01]. Typically, at least three specimens were tested and averaged for the adhesive sample.

Impact peel strength is preferably more than 8 N/mm, more preferably more than 10 N/mm, more particularly preferably more than 12 N/mm, most preferably more than 15 N/mm. Impact peel failure is preferably more than 85% cohesive failure (CF), more preferably more than 95% CF, and most preferably 100% CF.

The adhesives of the invention preferably show a lap shear failure mode, after curing for 7 days at 23°C, of 85% or greater cohesive failure, more preferably 95% or greater cohesive failure, most preferably 100% cohesive failure when measured according to SAE J1529 test procedure.

The press flow viscosity of either component A or B is preferably more than 5 seconds/20 grams, more preferably more than 9 seconds/20 grams, more particularly preferably more than 12 seconds/20 grams. The press flow viscosity of either component A or B is preferably less than 60 seconds/20 grams, more preferably less than 45 seconds/20 grams, more particularly preferably more than 35 seconds/20 grams. All numbers relate to press flow viscosities determined by recording the amount of time (in seconds) for 20 grams of the adhesive sample component to pass through a 2.64 mm orifice under conditions of 310 kPa applied pressure at 25 °C.

Brookfield viscosity is measured according to the procedure described in US patent no. 5,922,809 at column 12, lines 38 to 49 using a Model DV-E Brookfield Viscometer or equivalent. The freshly prepared adhesive component (either component A or component B) is first conditioned at 40°C for at least 2 hours. The test is then done with a RV spindle #7 at a speed of 6 revolutions per second and at 40 °C unless specified otherwise.

The Brookfield viscosity of either component A or B at 40°C is preferably more than 50,000 centipoises, more preferably more than 100,000 centipoises, more particularly preferably more than 160,000 centipoises. The Brookfield viscosity of either component A or B at 40°C is preferably less than 1,000,000 centipoises, more preferably less than 700,000 centipoises, more particularly preferably less than 550,000 centipoises.

Electrical resistivity is measured as follows: two copper strips (50 mm in length and 12 mm in width) are set in parallel on a nonconductive surface such as a cardboard with 50 mm between them. An adhesive bead (about 4 mm in diameter) is dispensed perpendicularly to the two copper strips through a static mixer, passing through the middle of the strips. The bead is cured for 7 days (or a specific time) at 23°C and 50% relative humidity. The resistivity of the bead is determined with an electric multi-meter by contacting its two probes with the two copper strips. Electrical resistivity is preferably more than 300,000 ohms, more preferably more than 500,000 ohms, more particularly preferably more than 1x10⁶ ohms, and most preferably more than 2x10⁶ ohms.

### Applications

The properties of the adhesives of the invention make them particularly suited to applications in which good adhesion, good elongation and good thermal conductivity are required.

In a preferred embodiment, the adhesives of the invention are used to adhere battery assemblies, to adhere battery cells together and adhere battery cells into the module or adhere battery cells to the cooling plate.

### EXAMPLES

| **Table 1. Ingredients** | |
|---|---|
| **Trademark or abbreviation** | **Chemistry** |
| VORANOL 220-260 | a poly(propyleneoxide) polyol diol having an average molecular weight 425 g/mol, average equivalent weight 215.7 g/eq, average OH number 259 mq KOH/q |
| VORANOL 230-660 | a poly(propyleneoxide) polyol triol having an average molecular weight 250, average equivalent weight 84.9 g/eq, average OH number 660 mg KOH/g |
| VORANOL 220-056 | a propylene glycol initiated, 2000 molecular weight homopolymer diol, having an average equivalent weight of 1,000 g/eq, average OH number 56 mg KOH/g |
| Voranol 220-110N | a propylene polyol initiated nominal 1000 molecular weight homopolymer polyether diol, having average equivalent weight of 503.5 g/eq, average OH number 111 mg KOH/g |
| | 1,4-butane diol |
| PTHF1000 | Poly(tetramethylene oxide) glycol having an average molecular weight 1000 |
| Isonate 143L | Polycarbodiimide-modified 4,4'-Methylenediphenyl diisocyanate |
| PAPI^{™} 94 | Polymeric MDI that contains MDI |
| PTSI | p-toluenesulfonyl isocyanate |
| Fomrez^{™} UL29 | dioctyltin mercaptide catalyst |
| Silquest 9492 | 3-Trimethoxysilyl-N-(3-trimethoxysilylpropyl)propan-1-amine |
| | 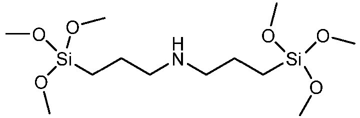 |
| Apyral 20X | Bimodally distributed aluminium trihydroxide (ATH) Particle size (by laser diffraction in acetone): |
| | D₁₀ (micron) 0.5 |
| | D₅₀ (micron) 8 |
| | D₉₀ (micron) 80 |
| Cab-O-Sil TS720 | Fumed silica that has been surface-treated with polydimethylsiloxane |
| Elftex S7100 | Carbon black |
| Purmol 4ST | Zeolite molecular sieve |

### Test methods

### Press flow viscosity

The freshly prepared adhesive component (either component A or component B) was first conditioned at 25 °C for at least 2 hours. Then, its press flow viscosity (seconds/20 grams) was determined by recording the amount of time (in seconds) for 20 grams of the adhesive sample component to pass through a 2.64 mm orifice under conditions of 310 kPa applied pressure at 25 °C, unless otherwise specified.
The press flow viscosity of either component A or B is more than 5 seconds/20 grams, preferably more than 9 seconds/20 grams, more preferably more than 12 seconds/20 grams. The press flow viscosity of either component A or B is less than 60 seconds/20 grams, preferably less than 45 seconds/20 grams, more preferably more than 35 seconds/20 grams.

### Lap shear test

The lap shear test was performed according to SAE J1529 test procedure which is described below. A round bead (approximately 4 mm in diameter) of a two-component adhesive composition was dispensed with an air gun through a static mixer and applied along the width of the 25 mm by 100 mm of a e-coated (ED6100C) steel coupon and at the coupon end. The second e-coated (ED6100C) steel coupon of same size was immediately pressed on the adhesive bead to give a final height of 1 mm and an overlap of 12.7mm for the 2 component adhesive composition in between. The prepared lap shear sample was allowed to cure under conditions of 23°C and 50% relative humidity (RH) for 7 days unless specified otherwise. The sample was then pulled right away or after more environmental exposures at a rate of 1.27 mm/min with an Instron Tester. The load (Newton) at sample break divided by the sample area (mm²) gives the lap shear adhesion strength (MPa). The failure mode was evaluated as adhesive failure (AF), thin film failure (TF) and/or cohesive failure (CF). In case of AF, the cured bead was separated from the tested substrate surface, while in CF, separation occurred within the adhesive composition and TF is a special case of CF in which there is a thin film of cured adhesive composition left on the substrate after testing.
Lap shear strength of room temperature testing is more than 4 MPa, preferably more than 5 MPa, and more preferably more than 6 MPa. Lap shear elongation at max stress is more than 50%, preferably more than 55%, and more preferably more than 60%. Lap shear failure is more than 85% CF, preferably more than 95% CF, and most preferably 100% CF.

### Brookfield Viscosity

Brookfield viscosity was measured according to the procedure described in US patent no. 5,922,809 at column 12, lines 38 to 49 using a Model DV-E Brookfield Viscometer or equivalent. The freshly prepared adhesive component (either component A or component B) was first conditioned at 40 °C for at least 2 hours. The test was then done with a RV spindle #7 at a speed of 6 revolutions per second and at 40 °C unless specified otherwise.
The Brookfield viscosity of either component A or B at 40 °C is more than 50,000 centipoises, preferably more than 100,000 centipoises, more preferably more than 160,000 centipoises. The Brookfield viscosity of either component A or B at 40 °C is less than 1,000,000 centipoises, preferably less than 700,000 centipoises, more preferably less than 550,000 centipoises.

### Tensile and Elongation Properties

The two-component adhesive sample was dispensed through the spiral static mixer between two releasing papers and then pressed to form a round plaque with 3 mm thickness. The round plaque was cured for 7 days at conditions of 23°C and 50% relative humidity (RH). Three test specimens were cut from the cured sample plaque with the Die C of ASTM D412 and tested at a pulling speed of 50 mm per minute with an Instron Tester Model 5969. Tensile strength (MPa) was calculated by the force at peak (Newton) divided by the specimen cross-section area (mm²) and elongation was determined at the break point of the specimen, all in accordance with ASTM D412. Results for tensile strength and elongation of an adhesive sample were reported from the average of three specimens.

Tensile strength is preferably more than 4 MPa, more preferably more than 5 MPa and more particularly preferably more than 6 MPa. Elongation is preferably more than 15% at break, more preferably more than 25% at break, and more particularly preferably more than 30% at break.

### Impact Peel Test

Impact peel specimens were prepared using E-coated (ED6100C) steel coupons of 25.4 mm in width, 101.6 mm in length and 0.8 mm in thickness. The adhesive sample was dispensed through a spiral static mixer onto one end of the e-coated steel coupon which was then mated with another same e-coated steel coupon forming a 30 mm adhesive overlap and 1.2 mm bondline thickness at the end of the specimen. The impact peel specimen was cured under 23 °C and 50% relative humidity for 7 days or specified conditions. the cured impact specimen was pre-bent into a V shape at the other non-bonded end and then tested with a vertical impacting mass of 23.7 kg at a rate of 2.4 m/s. The reported impact strength (Newton/mm) is of the average for the region between 45% and 90% of the displacement to failure, all in accordance with ISO 11343 [2003 04 01]. Typically, at least three specimens were tested and averaged for the adhesive sample.

Impact peel strength is more than 8 N/mm, preferably more than 10 N/mm, more preferably more than 12 N/mm. Most preferably more than 15 N/mm. Impact peel failure is more than 85%CF, preferably more than 95% CF, and most preferably 100%CF.

### Thermal Conductivity

Thermal Conductivity of the two-component adhesive sample was measured using Linseis Thermal Interface Material (TIM) Tester. The adhesive sample was dispensed through the static mixer between two releasing papers and then pressed to form a round plaque with about 1 mm thickness. The round plaque was cured for 7 days at conditions of 23°C and 50% relative humidity (RH). The cured round plaque was then cut into five individual specimens of 1-inch square in size and the thicknesses were measured again with a calliper (about 1 mm). The thermal impedance of the adhesive sample was measured at five different thicknesses by stacking specimens one at a time at 25°C with a 30°C gradient across the sample and set pressure of 0.3 MPa. Liquid silicone was used on both sides of each specimen to ensure good thermal contact between the specimens and the plates. The thermal conductivity of the adhesive sample (W/mK) is obtained from the thermal impedance plot, all in accordance with ASTM D5470.

### Electrical resistivity

Two copper strips (50 mm in length and 12 mm in width) were set in parallel on a nonconductive surface such as a cardboard with 50 mm between them. An adhesive bead (about 4 mm in diameter) was dispensed perpendicularly to the two copper strips through a static mixer, passing through the middle of the strips. The bead was cured for 7 days (or a specific time) at 23°C and 50% relative humidity. The resistivity of the bead was determined with an electric multi-meter by contacting its two probes with the two copper strips.
Electrical resistivity is more than 300,000 ohms, preferably more than 500,000 ohms, more preferably more than 1x10⁶ ohms, and most preferably more than 2x10⁶ ohms.

### Preparation of comparative and inventive adhesives

The ingredients of Component A for Comparative Example 1 and Inventive Examples 1-4 are shown in Table 2.

| **Table 2. Ingredients for Component A (isocyanate) of Comparative Example 1 (A CE1), and Inventive Examples 1-4 (A IE1, A IE2, A IE3, A IE4)** | | | | | | |
|---|---|---|---|---|---|---|
| **No.** | **Ingredient** | **A CE1 (wt%)** | **A IE1 (wt%)** | **A IE2 (wt%)** | **A IE3 (wt%)** | **A IE4 (wt%)** |
| 1 | PAPI 94 | 18.50 | 20.00 | -- | 12.00 | -- |
| 1a | Isonate 143L | -- | -- | 20.00 | 8.00 | 21.20 |
| 2 | VORANOL 220-056 | 12.60 | 11.10 | 11.10 | 11.10 | 9.90 |
| 3 | Silquest 9492 | 2.00 | 2.00 | 2.00 | 2.00 | 2.00 |
| 4 | Cab-O-Sil TS 720 | 1.00 | 1.00 | 1.00 | 1.00 | 1.00 |
| 5 | Apyral 20X | 65.00 | 65.00 | 65.00 | 65.00 | 65.00 |
| 6 | Elftex S7100 | 0.40 | 0.40 | 0.40 | 0.40 | 0.40 |
| 7 | PTSI | 0.5 | 0.50 | 0.50 | 0.50 | 0.50 |

Ingredients 1, 1a and 2 were added to a container and mixed at 1,000 rpm for 3 minutes using FlackTek speed mixer of model DAC600.2 VAC-LR. Then, ingredient 3 was added, and mixing was continued for another 3 minutes at 1000 rpm. The temperature of the mixture was raised to 54 °C and mixing was continued for an additional 2 minutes at 1000 rpm. Half of ingredients 4, 5 and 6 were added and mixing was continued for 2.5 minutes. Ingredient 7 and the remaining half of ingredients 4, 5 and 6 were added and mixing was continued for 2.5 minutes at 1000 rpm. Finally, the whole mixture was mixed for 3 minutes at 1000 rpm under vacuum. The finished material was packaged into air-tight tubes.

The ingredients for Component B of Comparative Example 1 and Inventive Examples 1-4 are shown in Table 3.

| **Table 3. Ingredients for Component B (polyol) of Comparative Example 1 (CE1), and Inventive Examples 1-4 (IE1, IE2, IE3, IE4)** | | | | | | |
|---|---|---|---|---|---|---|
| **No.** | **Ingredient** | **B CE1 (wt%)** | **B IE1 (wt%)** | **B IE2 (wt%)** | **B IE3 (wt%)** | **B IE4 (wt%)** |
| 1 | VORANOL 220-056N | 1.49 | 1.53 | 1.49 | 1.53 | 2.69 |
| 1a | VORANOL 220-110N | 11.33 | -- | -- | -- | -- |
| 1b | VORANOL 220-260 | 9.23 | 9.23 | 9.23 | 9.23 | 9.23 |
| 1c | VORANOL 230-660 | 2.14 | 2.14 | 2.14 | 2.14 | 2.14 |
| 1d | PTHF1000 | -- | 11.33 | 11.33 | 11.33 | 11.45 |
| 2 | 1,4-butane diol | 0.98 | 1.35 | 0.98 | 1.28 | 0.90 |
| 3 | Isonate 143L | 1.20 | 1.20 | 1.20 | 1.20 | 0.00 |
| 4 | Apyral 20X | 68.80 | 68.43 | 68.80 | 68.50 | 68.80 |
| 5 | PURMOL 4ST | 3.76 | 3.76 | 3.76 | 3.76 | 3.76 |
| 6 | Cab-O-Sil TS 720 | 1.00 | 1.00 | 1.00 | 1.00 | 1.00 |
| 7 | Fomrez UL29 | 0.07 | 0.03 | 0.07 | 0.03 | 0.03 |

Ingredients 1, 1a-d (1d was preheated at 54°C for 2 hours prior to use), 2 and 3 were added into a container and mixed at 1,000 rpm for 1 minute using FlackTek speed mixer of model DAC600.2 VAC-LR (1d can also be added after ingredient 3 is already mixed in). Half of ingredients 4, 5, 6 and 7 were added and mixing was continued at 1000 rpm for 2.5 minutes. The second half of ingredients 4, 5, 6 and 7 were added and mixing was continued at 1000 rpm for 2.5 minutes. Finally, the whole mixture was mixed at 1000 rpm for 3 minutes under vacuum. The material was packaged into air-tight tubes.

Tables 4 and 5 give the press flow viscosities for the components A and B of the comparative and inventive example 2 and 4. Table 6 gives the Brookfield viscosities for the components A and B of inventive example 2 and 4.

**Table 4. press flow viscosity of comparative example components A and B**

| **sample** | **A CE1** | **B CE1** |
|---|---|---|
| fresh samples (orifice 2.64mm, 310KPa, 25 °C) | | |
| press flow viscosity, in seconds per 20 g | 26 | 13 |

**Table 5. press flow viscosity of inventive example components A and B**

| **sample** | **A IE 2** | **B IE2** | **A IE4** | **B IE4** |
|---|---|---|---|---|
| fresh samples (orifice 2.64mm, 310KPa, 25 °C) | | | | |
| press flow viscosity, in seconds per 20 g | 29 | 25 | 17 | 13 |

**Table 6. Brookfield viscosity of inventive example components A and B**

| **samples** | **A IE 2** | **B IE2** | **A IE4** | **B IE4** |
|---|---|---|---|---|
| **Brookfield Viscosity** | | | | |
| (preheated at 40 C for 1 hour, then measured right away), centipoise | 204, 700 | 454,000 | 190,700 | 318,700 |

Adhesives were prepared by dispensing Component A and Component B in a one-to-one volume ratio through a spiral static mixer. Component temperature could be at room temperature or at a higher temperature such as 40 °C. Curing was typically for 7 days at 23°C and 50% relative humidity (RH). The characteristics of the cured adhesives are listed in Table 7, Table 8 and Table 9.

The adhesives all showed a good thermal conductivity of greater than 1 W/mK. Lap shear strength was comparable for all adhesives, and all showed a failure mode of 100% cohesive failure. However, the Inventive Examples all showed a significantly improved lap shear elongation at maximum stress, as compared to the Comparative Example. The inventive sample 2 also showed much better tensile elongation than the comparative sample. The inventive sample 4 had a resistivity of more than 2 x 10⁶ ohms. Both inventive sample 2 and 4 showed impact peel strength of 18.4 N/mm and 21.1 N/mm, respectively.

| **Table 7. Properties of comparative and inventive adhesives** | | | | | |
|---|---|---|---|---|---|
| | **CE1** | **IE1** | **IE2** | **IE3** | **IE4** |
| Thermal conductivity (W/mK) | 1.12 | 1.20 | 1.44 | 1.16 | 1.37 |
| Lap shear testing at room temperature (MPa) | 6.49 | 6.21 | 6.65 | 6.83 | 6.92 |
| e-coated (EC6100C) steel coupons wiped with iso-propanol | | | | | |
| Adhesive bond dimensions 12.7 mm X 25.4 mm X 1 mm | | | | | |
| Test speed 1.27 mm/min | | | | | |
| Elongation% at maximum stress | 46.7 | 60.0 | 68.0 | 64.7 | 75.7 |
| Cohesive failure % | 100 | 100 | 100 | 100 | 100 |

**Table 8. tensile and elongation properties of comparative and inventive adhesives**

| **adhesive sample** | **CE 1** | **IE 2** |
|---|---|---|
| **tensile elongation testing at room temperature, speed 50mm/min** | | |
| tensile strength, MPa | 6.98 | 6.89 |
| elongation% at break | 21.4 | 37.8 |
| **tensile elongation testing at 60 C, speed 50mm/min** | | |
| Tensile Strength, MPa | 3.87 | 4.52 |
| Elongation at Break, % | 13.6 | 24.6 |

**Table 9. Impact peel strength of inventive adhesives**

| **adhesive sample** | | **IE 2** | **IE 4** |
|---|---|---|---|
| **Impact Peel Test** | | | |
| | Impact Peel Strength (N/mm) | 18.4 | 21.1 |
| | Cohesive Failure, % | 100 | 100 |

## Claims

1. A thermally conductive, two-component polyurethane adhesive composition comprising:
(A) a polyisocyanate component, Component A, comprising:
(a1) at least one polyisocyanate;
(a2) 40 to 85 wt% thermally conductive filler, based on the total weight of Component A;
(a3) optionally a polyether polyol;
(a4) optionally a silane adhesion promoter;
(B) a polyol component, Component B, comprising:
(b1) at least one polyetherpolyol;
(b2) 40 to 85 wt% thermally conductive filler, based on the total weight of Component B;
(b3) a catalyst capable of catalyzing the reaction of an isocyanate and a polyol;
(b4) optionally a silane adhesion promoter;
wherein at least one of the polyether polyols in Component A and Component B is a poly(tetramethylene oxide) glycol, and wherein the equivalent ratio of the isocyanate from Component A over the hydroxyl from Component B is from 0.8 to 2.0.

2. A thermally conductive, two-component polyurethane adhesive composition according to claim 1, further comprising one or more of the following limitations (i) - (vi):
(i) wherein the at least one polyetherpolyol in Component B comprises poly(tetramethylene oxide) glycol;
(ii) wherein the at least one polyisocyanate (a1) comprises polycarbodiimide-modified MDI;
(iii) wherein the at least one polyetherpolyol in Component (B) comprises at least 8 wt% poly(tetramethylene oxide) glycol, based on the total weight of Component B;
(iv) wherein the equivalent ratio of the isocyanate from Component A over the hydroxyl from Component B is from 0.9 to 1.5;
(v) wherein Component A comprises poly(tetramethylene oxide) glycol
(vi) wherein the at least one polyisocyante (a1) comprises a difunctional isocyanate compound.

3. A thermally conductive, two-component polyurethane adhesive composition according to claims 1 to 2, wherein Component A comprises a silane adhesion promoter.

4. A thermally conductive, two-component polyurethane adhesive composition according to any one of claims 1 to 3, wherein Component A comprises an amino silane adhesion promoter.

5. A thermally conductive, two-component polyurethane adhesive composition according to any one of claims 1 to 4, wherein the silane adhesion promoter is 3-trimethoxysilyl- N-(3-trimethoxysilylpropyl)propan-1-amine.

6. A thermally conductive, two-component polyurethane adhesive composition according to any one of claims 1 to 5, wherein the Component B comprises a polyether polyol selected from a diol, a triol and mixtures of these.

7. A thermally conductive, two-component polyurethane adhesive composition according to any one of claims 1 to 6, wherein Component B comprises:
poly(propylene oxide) diol;
poly(propylene oxide) triol; and
poly(tetramethylene oxide) diol.

8. A thermally conductive, two-component polyurethane adhesive composition according to any one of claims 1 to 7, wherein Component B comprises:
a poly(propylene oxide) diol having an average equivalent weight of 900-1,100 g/eq;
a poly(propylene oxide) diol having an average equivalent weight of 190-230 g/eq;
a poly(propylene oxide) triol having an average equivalent weight of 70-100 g/eq; and
poly(tetramethylene oxide) diol.

9. A thermally conductive, two-component polyurethane adhesive composition according to any one of claims 1 to 8, wherein Component B comprises:
8 to 14 wt% poly(propylene oxide) diol;
1.5 to 5 wt% poly(propylene oxide) triol; and
5 to 15 wt% poly(tetramethylene oxide) diol;
based on the total weight of Component B.

10. A thermally conductive, two-component polyurethane adhesive composition according to any one of claims 1 to 9, wherein Component B comprises:
1 to 4 wt% of a poly(propylene oxide) diol having an average equivalent weight of 900-1,100 g/eq;
7 to 14 wt% of a poly(propylene oxide) diol having an average equivalent weight of 190-230 g/eq;
1.5 to 3 wt% of a poly(propylene oxide) triol having an average equivalent weight of 70-100 g/eq; and
5 to 15 wt% poly(tetramethylene oxide) diol;
based on the total weight of Component B.

11. A thermally conductive, two-component polyurethane adhesive composition according to any one of claims 1 to 10, wherein Component B comprises 1,4-butane diol and wherein Component A comprises polymeric MDI that contains MDI.

12. A thermally conductive, two-component polyurethane adhesive composition according to any one of claims 1 to 11, wherein the thermally conductive filler (a2, b2) is selected from fillers that have a coefficient of thermal conductivity, measured according to the method identified in the specification, that is greater than 5 W/m°K, greater than 10 W/m°K, or greater than 15 W / m°K.

13. A thermally conductive, two-component polyurethane adhesive composition according to any one of claims 1 to 12, wherein the thermally conductive filler is present in the adhesive at a concentration of 65-85 wt%, based on the total weight of the adhesive.

14. A thermally conductive, two-component polyurethane adhesive composition according to any one of claims 1 to 13, wherein the adhesive has a thermal conductivity of at or about 1.1 W/mK or more, after curing for 7 days at 23°C, measured according to the method identified in the specification.

15. A method for adhering two or more substrates, comprising the steps of:
(1) providing a thermally conductive, two-component polyurethane adhesive composition comprising:
(A) a polyisocyanate component, Component A, comprising:
(a1) at least one polyisocyanate;
(a2) 40 to 85 wt% thermally conductive filler, based on the total weight of Component A;
(a3) optionally a polyether polyol;
(a4) optionally a silane adhesion promoter;
(B) a polyol component, Component B, comprising:
(b1) at least one polyether polyol;
(b2) 40 to 85 wt% thermally conductive filler, based on the total weight of Component B;
(b3) a catalyst capable of catalyzing the reaction of an isocyanate and a polyol;
(b4) optionally a silane adhesion promoter;
wherein at least one of the polyether polyols in Component A and Component B is a poly(tetramethylene oxide) glycol, and wherein the equivalent ratio of the isocyanate from Component A over the hydroxyl from Component B is from 0.8 to 2.0;
(2) mixing Component A and Component B in a desired ratio to produce the adhesive;
(3) applying the adhesive to at least one substrate;
(4) bringing a second substrate into contact with the adhesive; and
(5) allowing the adhesive to cure.

## Patentansprüche

1. Wärmeleitende Zweikomponenten-Polyurethan-Klebstoffzusammensetzung, umfassend:
(A) eine Polyisocyanatkomponente, Komponente A, umfassend:
(a1) mindestens ein Polyisocyanat;
(a2) 40 bis 85 Gew.-% wärmeleitender Füllstoff, basierend auf dem Gesamtgewicht von Komponente A;
(a3) optional ein Polyetherpolyol;
(a4) optional einen Silan-Haftvermittler;
(B) eine Polyolkomponente, Komponente B, umfassend:
(b1) mindestens ein Polyetherpolyol;
(b2) 40 bis 85 Gew.-% wärmeleitender Füllstoff, basierend auf dem Gesamtgewicht von Komponente B;
(b3) einen Katalysator, der zum Katalysieren der Reaktion eines Isocyanats und eines Polyols imstande ist;
(b4) optional einen Silan-Haftvermittler;
wobei mindestens eines der Polyetherpolyole in Komponente A und Komponente B ein Poly(tetramethylenoxid)glykol ist, und wobei das Äquivalentverhältnis des Isocyanats aus Komponente A zum Hydroxyl aus Komponente B 0,8 bis 2,0 beträgt.

2. Wärmeleitende Zweikomponenten-Polyurethan-Klebstoffzusammensetzung nach Anspruch 1, die weiter eine oder mehrere der folgenden Einschränkungen umfasst (i) - (vi):
(i) wobei das mindestens eine Polyetherpolyol in Komponente B Poly(tetramethylenoxid)glykol umfasst;
(ii) wobei das mindestens eine Polyisocyanat (a1) Polycarbodiimidmodifiziertes MDI umfasst;
(iii) wobei das mindestens eine Polyetherpolyol in Komponente (B) mindestens 8 Gew.-% Poly(tetramethylenoxid)glykol, basierend auf dem Gesamtgewicht von Komponente B, umfasst;
(iv) wobei das Äquivalentverhältnis des Isocyanats aus Komponente A zum Hydroxyl aus Komponente B 0,9 bis 1,5 beträgt;
(v) wobei Komponente A Poly(tetramethylenoxid)glykol umfasst
(vi) wobei das mindestens eine Polyisocyanat (a1) eine difunktionelle Isocyanatverbindung umfasst.

3. Wärmeleitende Zweikomponenten-Polyurethan-Klebstoffzusammensetzung nach Ansprüchen 1 bis 2, wobei Komponente A einen Silan-Haftvermittler umfasst.

4. Wärmeleitende Zweikomponenten-Polyurethan-Klebstoffzusammensetzung nach einem der Ansprüche 1 bis 3, wobei Komponente A einen Aminosilan-Haftvermittler umfasst.

5. Wärmeleitende Zweikomponenten-Polyurethan-Klebstoffzusammensetzung nach einem der Ansprüche 1 bis 4, wobei der Silan-Haftvermittler 3-Trimethoxysilyl-N-(3-trimethoxysilylpropyl)propan-1-amin ist.

6. Wärmeleitende Zweikomponenten-Polyurethan-Klebstoffzusammensetzung nach einem der Ansprüche 1 bis 5, wobei die Komponente B ein Polyetherpolyol umfasst, das aus einem Diol, einem Triol und Gemischen daraus ausgewählt ist.

7. Wärmeleitende Zweikomponenten-Polyurethan-Klebstoffzusammensetzung nach einem der Ansprüche 1 bis 6, wobei Komponente B umfasst:
Poly(propylenoxid)diol;
Poly(propylenoxid)triol; und
Poly(tetramethylenoxid)diol.

8. Wärmeleitende Zweikomponenten-Polyurethan-Klebstoffzusammensetzung nach einem der Ansprüche 1 bis 7, wobei Komponente B umfasst:
ein Poly(propylenoxid)diol, das ein durchschnittliches Äquivalentgewicht von 900-1.100 g/eq aufweist;
ein Poly(propylenoxid)diol, das ein durchschnittliches Äquivalentgewicht von 190-230 g/eq aufweist;
ein Poly(propylenoxid)triol, das ein durchschnittliches Äquivalentgewicht von 70-100 g/eq aufweist; und
Poly(tetramethylenoxid)diol.

9. Wärmeleitende Zweikomponenten-Polyurethan-Klebstoffzusammensetzung nach einem der Ansprüche 1 bis 8, wobei Komponente B umfasst:
8 bis 14 Gew.-% Poly(propylenoxid)diol;
1,5 bis 5 Gew.-% Poly(tetramethylenoxid)diol; und
5 bis 15 Gew.-% Poly(tetramethylenoxid)diol;
basierend auf dem Gesamtgewicht von Komponente B.

10. Wärmeleitende Zweikomponenten-Polyurethan-Klebstoffzusammensetzung nach einem der Ansprüche 1 bis 9, wobei Komponente B umfasst:
1 bis 4 Gew.-% eines Poly(propylenoxid)diols, das ein durchschnittliches Äquivalentgewicht von 900-1.100 g/eq aufweist;
7 bis 14 Gew.-% eines Poly(propylenoxid)diols, das ein durchschnittliches Äquivalentgewicht von 190-230 g/eq aufweist;
1,5 bis 3 Gew.-% eines Poly(propylenoxid)triols, das ein durchschnittliches Äquivalentgewicht von 70-100 g/eq aufweist; und
5 bis 15 Gew.-% Poly(tetramethylenoxid)diol;
basierend auf dem Gesamtgewicht von Komponente B.

11. Wärmeleitende Zweikomponenten-Polyurethan-Klebstoffzusammensetzung nach einem der Ansprüche 1 bis 10, wobei Komponente B 1,4-Butandiol umfasst und Komponente A polymeres MDI umfasst, das MDI enthält.

12. Wärmeleitende Zweikomponenten-Polyurethan-Klebstoffzusammensetzung nach einem der Ansprüche 1 bis 11, wobei der wärmeleitende Füllstoff (a2, b2) aus Füllstoffen ausgewählt ist, die einen nach dem in der Beschreibung angegebenen Verfahren gemessenen Wärmeleitfähigkeitskoeffizienten aufweisen, der größer als 5 W/m°K, größer als 10 W/m°K, oder größer als 15 W/m°K ist.

13. Wärmeleitende Zweikomponenten-Polyurethan-Klebstoffzusammensetzung nach einem der Ansprüche 1 bis 12, wobei der wärmeleitende Füllstoff in dem Klebstoff in einer Konzentration von 65-85 Gew.-% basierend auf dem Gesamtgewicht des Klebstoffs vorhanden ist.

14. Wärmeleitende Zweikomponenten-Polyurethan-Klebstoffzusammensetzung nach einem der Ansprüche 1 bis 13, wobei der Klebstoff eine Wärmeleitfähigkeit von oder von etwa 1,1 W/mK oder mehr, nach 7-tägiger Aushärtung bei 23 °C, nach dem in der Spezifikation identifizierten Verfahren gemessen, aufweist.

15. Verfahren zum Verkleben von zwei oder mehr Substraten, umfassend die Schritte zum:
(1) Bereitstellen einer wärmeleitenden Zweikomponenten-Polyurethan-Klebstoffzusammensetzung, umfassend:
(A) eine Polyisocyanatkomponente, Komponente A, umfassend:
(a1) mindestens ein Polyisocyanat;
(a2) 40 bis 85 Gew.-% wärmeleitender Füllstoff, basierend auf dem Gesamtgewicht von Komponente A;
(a3) optional ein Polyetherpolyol;
(a4) optional einen Silan-Haftvermittler;
(B) eine Polyolkomponente, Komponente B, umfassend:
(b1) mindestens ein Polyether-Polyol;
(b2) 40 bis 85 Gew.-% wärmeleitender Füllstoff, basierend auf dem Gesamtgewicht von Komponente B;
(b3) einen Katalysator, der zum Katalysieren der Reaktion eines Isocyanats und eines Polyols imstande ist;
(b4) optional einen Silan-Haftvermittler;
wobei mindestens eines der Polyetherpolyole in Komponente A und Komponente B ein Poly(tetramethylenoxid)glykol ist, und wobei das Äquivalentverhältnis des Isocyanats aus Komponente A zum Hydroxyl aus Komponente B 0,8 bis 2,0 beträgt;
(2) Mischen von Komponente A und Komponente B in einem gewünschten Verhältnis, um den Klebstoff herzustellen;
(3) Auftragen des Klebstoffs auf mindestens ein Substrat;
(4) Inkontaktbringen eines zweiten Substrats mit dem Klebstoff; und
(5) Ermöglichen, dass der Klebstoff aushärtet.

## Revendications

1. Composition adhésive en polyuréthane à deux composants, thermoconductrice, comprenant :
(A) un composant polyisocyanate, composant A, comprenant :
(a1) au moins un polyisocyanate ;
(a2) 40 à 85 % en poids de charge thermoconductrice, par rapport au poids total du composant A ;
(a3) éventuellement un polyol polyéther ;
(a4) éventuellement un promoteur d'adhérence au silane ;
(B) un composant polyol, composant B, comprenant :
(b1) au moins un polyétherpolyol ;
(b2) 40 à 85 % en poids de charge thermoconductrice, par rapport au poids total du composant B ;
(b3) un catalyseur capable de catalyser la réaction d'un isocyanate et d'un polyol ;
(b4) éventuellement un promoteur d'adhérence au silane ;
dans laquelle au moins l'un des polyols de polyéther dans le composant A et le composant B est un poly(oxyde de tétraméthylène) glycol, et dans laquelle le rapport équivalent de l'isocyanate du composant A sur l'hydroxyle du composant B est de 0,8 à 2,0.

2. Composition adhésive de polyuréthane à deux composants, thermoconductrice, selon la revendication 1, comprenant en outre une ou plusieurs des limitations suivantes (i) - (vi) :
(i) dans laquelle le au moins un polyétherpolyol du composant B comprend du poly(oxyde de tétraméthylène) glycol ;
(ii) dans laquelle le au moins un polyisocyanate (a1) comprend du MDI modifié par du polycarbodiimide ;
(iii) dans laquelle le au moins un polyétherpolyol du composant (B) comprend au moins 8 % en poids de poly(oxyde de tétraméthylène) glycol, par rapport au poids total du composant B ;
(iv) dans laquelle le rapport équivalent de l'isocyanate du composant A sur l'hydroxyle du composant B est de 0,9 à 1,5 ;
(v) dans laquelle le composant A comprend du poly(oxyde de tétraméthylène) glycol ;
(vi) dans laquelle le au moins un polyisocyanate (a1) comprend un composé isocyanate difonctionnel.

3. Composition adhésive de polyuréthane à deux composants, thermoconductrice, selon les revendications 1 et 2, dans laquelle le composant A comprend un promoteur d'adhérence au silane.

4. Composition adhésive de polyuréthane à deux composants, thermoconductrice, selon l'une quelconque des revendications 1 à 3, dans laquelle le composant A comprend un promoteur d'adhérence à l'aminosilane.

5. Composition adhésive de polyuréthane à deux composants, thermoconductrice, selon l'une quelconque des revendications 1 à 4, dans laquelle le promoteur d'adhérence au silane est la 3-triméthoxysilyl-N-(3-triméthoxysilylpropyl)propan-1-amine.

6. Composition adhésive de polyuréthane à deux composants, thermoconductrice, selon l'une quelconque des revendications 1 à 5, dans laquelle le composant B comprend un polyol de polyéther choisi parmi un diol, un triol et des mélanges de ceux-ci.

7. Composition adhésive de polyuréthane à deux composants, thermoconductrice, selon l'une quelconque des revendications 1 à 6, dans laquelle le composant B comprend :
poly(oxyde de propylène) diol ;
poly(oxyde de propylène) triol ; et
poly(oxyde de tétraméthylène) diol.

8. Composition adhésive de polyuréthane à deux composants, thermoconductrice, selon l'une quelconque des revendications 1 à 7, dans laquelle le composant B comprend :
un poly(oxyde de propylène) diol présentant un poids équivalent moyen de 900-1 100 g/éq ;
un poly(oxyde de propylène) diol présentant un poids équivalent moyen de 190-230 g/éq ;
un poly(oxyde de propylène) triol présentant un poids équivalent moyen de 70-100 g/éq ; et
poly(oxyde de tétraméthylène) diol.

9. Composition adhésive de polyuréthane à deux composants, thermoconductrice, selon l'une quelconque des revendications 1 à 8, dans laquelle le composant B comprend :
8 à 14 % en poids de poly(oxyde de propylène) diol ;
1,5 à 5 % en poids de poly(oxyde de propylène) triol ; et
5 à 15 % en poids de poly(oxyde de tétraméthylène) diol ;
par rapport au poids total du composant B.

10. Composition adhésive de polyuréthane à deux composants, thermoconductrice, selon l'une quelconque des revendications 1 à 9, dans laquelle le composant B comprend :
1 à 4 % en poids d'un poly(oxyde de propylène) diol présentant un poids équivalent moyen de 900-1 100 g/éq ;
7 à 14 % en poids d'un poly(oxyde de propylène) diol présentant un poids équivalent moyen de 190-230 g/éq ;
1,5 à 3 % en poids d'un poly(oxyde de propylène) triol présentant un poids équivalent moyen de 70-100 g/éq ; et
5 à 15 % en poids de poly(oxyde de tétraméthylène) diol ;
par rapport au poids total du composant B.

11. Composition adhésive de polyuréthane à deux composants, thermoconductrice, selon l'une quelconque des revendications 1 à 10, dans laquelle le composant B comprend du 1,4-butane diol et dans laquelle le composant A comprend du MDI polymère qui contient du MDI.

12. Composition adhésive de polyuréthane à deux composants, thermoconductrice, selon l'une quelconque des revendications 1 à 11, dans laquelle la charge thermoconductrice (a2, b2) est choisie parmi des charges présentant un coefficient de conductivité thermique, mesuré selon la méthode identifiée dans le mémoire, qui est supérieur à 5 W/m°K, supérieur à 10 W/m°K, ou supérieur à 15 W/m°K.

13. Composition adhésive de polyuréthane à deux composants, thermoconductrice, selon l'une quelconque des revendications 1 à 12, dans laquelle la charge thermoconductrice est présente dans l'adhésif à une concentration de 65-85 % en poids, par rapport au poids total de l'adhésif.

14. Composition adhésive de polyuréthane à deux composants, thermoconductrice, selon l'une quelconque des revendications 1 à 13, dans laquelle l'adhésif présente une conductivité thermique de ou d'environ 1,1 W/mK ou plus, après durcissement pendant 7 jours à 23 °C, mesurée selon la méthode identifiée dans le mémoire.

15. Procédé permettant de coller deux substrats ou plus, comprenant les étapes de :
(1) fourniture d'une composition adhésive de polyuréthane à deux composants, thermoconductrice, comprenant :
(A) un composant polyisocyanate, composant A, comprenant :
(a1) au moins un polyisocyanate ;
(a2) 40 à 85 % en poids de charge thermoconductrice, par rapport au poids total du composant A ;
(a3) éventuellement un polyol polyéther ;
(a4) éventuellement un promoteur d'adhérence au silane ;
(B) un composant polyol, composant B, comprenant :
(b1) au moins un polyol polyéther ;
(b2) 40 à 85 % en poids de charge thermoconductrice, par rapport au poids total du composant B ;
(b3) un catalyseur capable de catalyser la réaction d'un isocyanate et d'un polyol ;
(b4) éventuellement un promoteur d'adhérence au silane ;
dans lequel au moins l'un des polyols de polyéther dans le composant A et le composant B est un poly(oxyde de tétraméthylène) glycol, et dans lequel le rapport équivalent de l'isocyanate du composant A sur l'hydroxyle du composant B est de 0,8 à 2,0 ;
(2) mélange du composant A et du composant B dans un rapport souhaité pour produire l'adhésif ;
(3) application de l'adhésif sur au moins un substrat ;
(4) mise d'un second substrat en contact avec l'adhésif ; et
(5) fait de laisser l'adhésif durcir.
